# FASCICULE DE BREVET EUROPEEN

(11) **EP 3 953 191 B1**
(45) Date de publication et mention de la délivrance du brevet: **31.05.2023**
(21) Numéro de dépôt: 20719151.1
(22) Date de dépôt: 09.04.2020
(51) Int. Cl.: B60C 23/04, B29C 70/68, B31D 1/02, G06K 19/077, B29D 30/00, B29C 70/72

(54) **PROCÉDÉ D'ENROBAGE DE DISPOSITIFS ÉLECTRONIQUES**
VERFAHREN ZUR VERKAPSELUNG ELEKTRONISCHER VORRICHTUNGEN
METHOD FOR ENCAPSULATING ELECTRONIC DEVICES

(30) Priorité: 11.04.2019 FR 1903889
(43) Date de publication de la demande: 16.02.2022
(73) Titulaire: COMPAGNIE GENERALE DES ETABLISSEMENTS MICHELIN, 63000 Clermont-Ferrand (FR)
(72) Inventeur: PORTIER, Guillaume, 63040 CLERMONT-FERRAND Cedex 9 (FR); EYROULET, Nicolas, 63040 CLERMONT-FERRAND Cedex 9 (FR); LALLEMENT, Claude, 63040 CLERMONT-FERRAND Cedex 9 (FR); FORICHON, Baptiste, 63040 CLERMONT-FERRAND Cedex 9 (FR)
(74) Mandataire: Louret, Sylvain
(86) Numéro de dépôt international: PCT/EP2020/060131
(87) Numéro de publication internationale: WO 2020/208132

(56) Documents cités:
- EP-A1- 1 522 957
- WO-A1-2010/007283
- JP-A- 2000 108 619
- US-A1- 2008 121 724

## Description

### Domaine technique de l'invention

La présente invention est relative aux procédés d'enrobage de dispositifs électroniques, en particulier de dispositifs électroniques destinés à être intégrés à des articles de caoutchouc.

### Art antérieur

Il est courant d'intégrer dans un pneumatique un dispositif électronique comprenant par exemple un transpondeur à identification par radiofréquence passif. Ce type de transpondeur est généralement désigné par le sigle anglais RFID. Un tel dispositif électronique peut stocker des données, par exemple relatives au pneumatique.

Pour améliorer la qualité de la transmission des données stockées dans le dispositif électronique, il est courant de l'enrober préalablement dans de la gomme. En effet, d'une manière générale, plus la constante diélectrique de la masse de gomme enrobant le dispositif électronique est élevée, plus le signal électrique reçu et émis par le dispositif électronique est atténué. Étant donné que les constantes diélectriques des gommes généralement utilisées pour la fabrication de pneumatiques sont élevées, la transmission des données est fortement améliorée dans le cas où la constante diélectrique de la gomme d'enrobage du dispositif électronique est faible.

En outre, l'enrobage préalable du dispositif permet de le protéger lors de son stockage avant de l'incorporer dans un pneumatique.

On connaît dans l'état de la technique divers procédés de fabrication d'un semi-fini comprenant un dispositif électronique enrobé de gomme.

Par exemple, le document WO2010/007283 propose un procédé de fabrication d'au moins un semi-fini comprenant au moins un dispositif électronique enrobé de gomme, dans lequel on met le dispositif en contact avec une première bande de gomme et on le recouvre par une seconde bande de gomme de manière à enrober le dispositif et en ce que les deux bandes défilent sensiblement à une même vitesse depuis une première zone dans laquelle les deux bandes sont disjointes vers une seconde zone dans laquelle deux faces respectives des deux bandes sont en contact l'une avec l'autre.

Bien qu'efficace et performant, ce procédé nécessite d'aligner et de synchroniser correctement les bandes de gomme de manière à ce que le dispositif électronique soit correctement enrobé et les bandes correctement superposées.

De plus, il faut s'assurer que le collant à cru des bandes de gomme soit suffisant pour maintenir le dispositif électronique en place jusqu'à ce qu'il soit complètement enrobé de gomme.

Poursuivant ses recherches, la demanderesse a découvert un procédé d'enrobage permettant de s'affranchir des inconvénients cités.

### Description détaillée de l'invention

L'invention, décrite plus en détails ci-après, a pour objet un procédé d'enrobage de dispositifs électroniques, tel que défini à la revendication 1.

Des caractéristiques additionnelles avantageuses du procédé conforme à l'invention sont spécifiées aux revendications dépendantes.

### Définitions

Par vertical on entend, comme communément admis, selon la direction de la pesanteur. Par horizontal, on entend perpendiculairement à la verticale.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

La mesure de plasticité Mooney se fait selon le principe suivant et conformément à la norme ASTM D-1646. La composition ou l'élastomère, généralement cru, est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### Description des figures

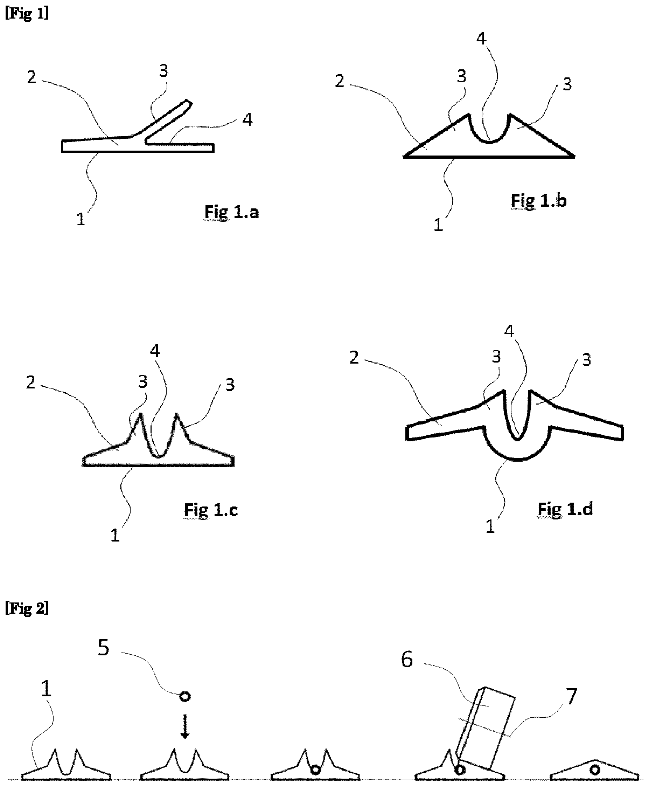

[Fig 1] La figure 1, comprenant les sous-figures La à 1.d, représente de manière schématique et non limitative quatre sections transversales de bandes profilées monoblocs selon l'invention. Les éléments sont numérotés de manière identique sur chaque sous-figure.
   Une bande profilée monobloc (1) comprend une embase (2) comprenant une zone d'accueil (4) du dispositif électronique et un rabat (3). La bande profilée monobloc (1) de la figure La comprend un seul rabat (3) tandis que les bandes profilées monoblocs (1) représentées schématiquement dans les figures 1.b à 1.d comprennent chacune deux rabats (3).
[Fig 2] La figure 2 représente de manière schématique un procédé d'enrobage d'un dispositif électronique selon l'invention. Une bande profilée monobloc (1) est positionnée sur un plan. On positionne un dispositif électronique (5) dans la zone d'accueil. Une force d'application est appliquée sur le rabat via une poulie (6) montée mobile en rotation autour de son axe de rotation (7) de manière à déformer le rabat et enrober partiellement le dispositif électronique. Une force d'application est ensuite appliquée sur le second rabat de manière similaire (non représentée), les deux rabats coopérant de manière à enrober totalement le dispositif électronique.

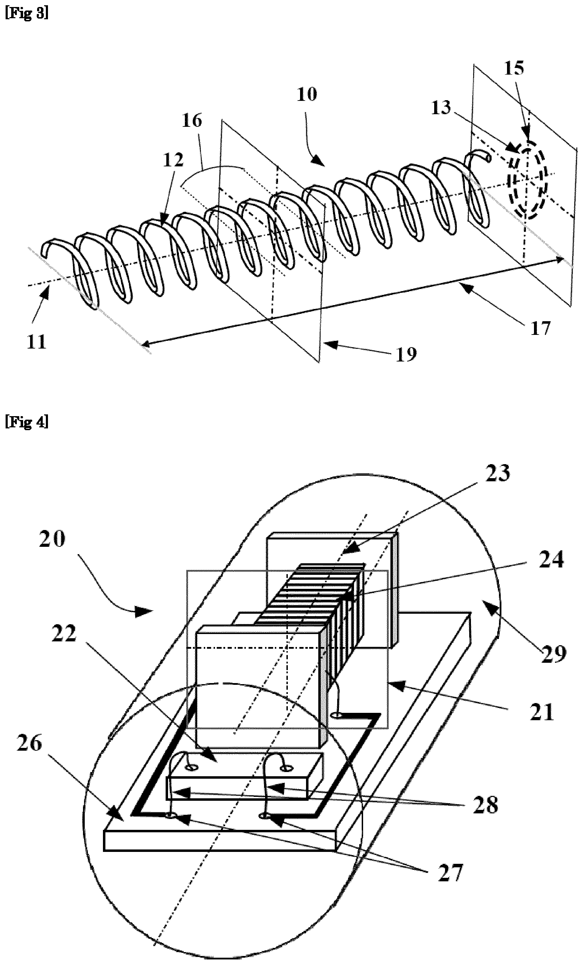

[Fig 3] La figure 3 présente une antenne rayonnante 10 constituée d'un fil en acier 12 qui a été déformé plastiquement afin de former un ressort hélicoïdal présentant un axe de révolution 11. Ce fil d'acier est revêtu d'une couche de conduction en cuivre, aluminium, argent, or, cuivre, étain, zinc ou laiton recouverte si nécessaire d'une couche d'isolation chimique par exemple en laiton, zinc, nickel ou étain pour protéger le matériau élastomérique du matériau de la couche de conduction.
   La conduction électromagnétique d'une telle antenne s'effectue principalement par un effet de peau, c'est-à-dire qu'elle est principalement assurée dans les couches extérieures de l'antenne. Cette épaisseur de peau est notamment fonction de la fréquence de rayonnement et du matériau constitutif de la couche de conduction. À titre d'exemple, pour une fréquence UHF (par exemple 915 MHz), l'épaisseur de peau est de l'ordre de 2,1 µm pour l'argent, 2,2 µm pour le cuivre, 4,4 µm pour le laiton.
   Le fil d'acier peut être revêtu de ces couches puis mis en forme ; alternativement il peut aussi être mis en forme puis revêtu.
   Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en compte le diamètre du fil. La longueur du ressort 17 correspond ici à la demi-longueur d'onde du signal de transmission du transpondeur radiofréquence 1 dans une masse caoutchouteuse. Ainsi on peut définir un plan médian 19 au ressort hélicoïdal perpendiculaire à l'axe de révolution 11 séparant l'antenne rayonnante en deux parties égales. Ce plan est au milieu de la zone centrale 16 de l'antenne rayonnante, cette zone centrale 16 correspond environ à 25 % de la longueur totale de l'antenne et de préférence 15 %.
[Fig 4] La figure 4 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 de l'antenne primaire 24 est noyé dans une masse rigide 29 en résine époxy haute température isolante électriquement constituant la partie électronique 20 du transpondeur radiofréquence 1.

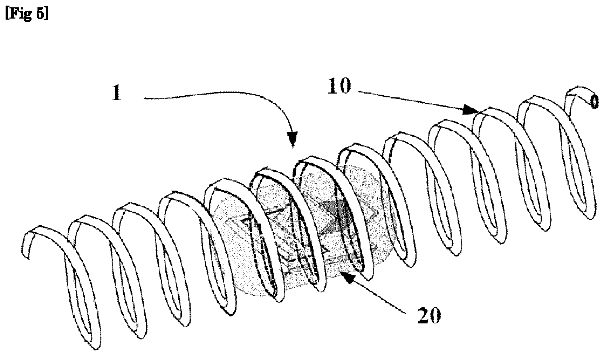

[Fig 5] La figure 5 présente un transpondeur radiofréquence 1 dans une configuration où la partie électronique 20 est située à l'intérieur de l'antenne rayonnante 10. La forme géométrique de la partie électronique 10 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve dans la zone centrale de l'antenne rayonnante et sensiblement superposé au plan médian 19 de l'antenne rayonnante 10.

### Procédé d'enrobage d'un dispositif électronique

L'invention a pour objet un procédé d'enrobage de dispositifs électroniques (5) dans lequel, successivement :
a. On place une bande profilée (1) sur une bande transporteuse, la bande profilée comprenant une embase (2) et, sur la face opposée à la face en contact avec la bande transporteuse, au moins un rabat (3) faisant saillie avec ladite embase (2), ledit rabat (3) s'étendant selon une direction parallèle à la direction de défilement de la bande transporteuse, dite direction longitudinale, ladite embase (2) comprenant une zone dite zone d'accueil (4) s'étendant le long dudit rabat (3), la bande transporteuse comprenant au regard de la zone d'accueil (4) un moyen magnétique ;
b. On positionne, selon la direction longitudinale, à intervalle régulier, un dispositif électronique (5) sur la zone d'accueil (4) de la bande profilée (1), ledit dispositif (5) comprenant au moins un matériau ferromagnétique, le moyen magnétique de la bande transporteuse maintenant en position le dispositif électronique (5) sur la zone d'accueil (4) ;
c. On déforme plastiquement le rabat (3) par application d'une force d'application selon une direction prédéterminée de manière à enrober le dispositif électronique (5).

L'étape a) du procédé selon l'invention consiste à positionner une bande profilée sur une bande transporteuse. La bande profilée peut être positionnée sur une bande transporteuse directement à la sortie d'une extrudeuse permettant d'obtenir ladite bande profilée, ou bien à partir d'un moyen de stockage, par exemple une bobine ou tout autre moyen approprié.

Ainsi, de manière préférée, le procédé d'enrobage selon l'invention comprend préalablement à l'étape a) une étape d'extrusion d'un matériau élastomérique de manière à obtenir la bande profilée. Le rabat peut être obtenu directement à l'issue de l'extrusion par une forme de filière adaptée, ou bien être généré par incision de la bande profilée monobloc obtenue par extrusion. L'incision peut par exemple être réalisée à l'aide de moyens de coupe disposés après la filière dans le sens de l'extrusion.

La bande profilée est positionné sur la bande transporteuse de manière à ce que la zone d'accueil soit accessible pour pouvoir positionner le dispositif électronique lors de l'étape b).

Le procédé selon l'invention comprend une étape b) dans laquelle un dispositif électronique est positionné sur la zone d'accueil de la bande profilée, ledit dispositif comprenant au moins un matériau ferromagnétique, le moyen magnétique de la bande transporteuse maintenant en position le dispositif électronique sur la zone d'accueil.

Un dispositif est positionné sur la zone d'accueil par des moyens de pose qui peuvent être tous moyens de pose adaptés au dispositif électronique. De tels moyens peuvent être par exemple un bras manipulateur comprenant des moyens magnétiques ou mécaniques activables ou désactivables permettant de saisir et de transporter un dispositif électronique d'une zone de stockage vers la zone d'accueil de la bande profilée puis de se dessaisir du dispositif une fois celui-ci positionné sur la zone d'accueil.

De manière préférée, on positionne le dispositif électronique à une vitesse sensiblement identique et parallèle à celle de défilement de la bande transporteuse. Cela permet que la vitesse relative du dispositif par rapport à la bande profilée soit sensiblement nulle lors de la pose du dispositif. Ainsi, cela réduit le risque que cette étape de pose endommage le dispositif électronique ou la bande profilée du fait d'un choc dû à un différentiel de vitesse.

Le moyen magnétique disposé au regard de la zone d'accueil de la bande profilée permet de maintenir le dispositif électronique, qui comprend au moins un matériau ferromagnétique, en position sur la zone d'accueil jusqu'à ce que le dispositif soit enrobé de gomme. Ainsi, le dispositif électronique peut être correctement positionné même en cas de déréglage du moyen de pose, ce qui permet de limiter le nombre de positionnements défectueux.

Dans un arrangement préféré, le moyen magnétique de la bande transporteuse est positionné sur la face opposée à la face en contact avec la bande profilée. Dans un autre arrangement préféré, le moyen magnétique est intégré dans la structure de la bande transporteuse.

De manière préférée, l'intervalle régulier de positionnement entre deux dispositifs électroniques est ajusté de telle manière qu'il n'y ait pas de chevauchement transversal entre deux dispositifs électroniques consécutifs.

Le procédé selon l'invention comprend ensuite une étape c) au cours de laquelle on déforme plastiquement le ou les rabats par application d'une force d'application selon une direction prédéterminée de manière à enrober totalement le dispositif électronique. De manière préférée, la force d'application est comprise entre 20 et 500 N, préférentiellement entre 50 et 100 N.

Conformément à l'invention, l'application d'une force d'application selon une direction prédéterminée permet de déformer plastiquement le rabat de manière à ce qu'il recouvre au moins partiellement le dispositif électronique.

Par « direction prédéterminée », on entend que la direction d'application de la force d'application est déterminée selon la forme du rabat et la direction longitudinale de la bande transporteuse de manière à permettre la déformation plastique du rabat afin qu'il vienne enrober au moins partiellement le dispositif électronique.

Cette direction est substantiellement constante dans le temps. Par constante, on entend que la projection de la direction d'application de la force d'application sur un plan transverse à la direction longitudinale de la bande transporteuse, ce plan transverse comprenant un point d'application de la force d'application, forme avec une droite contenue dans ce plan transverse un angle dont la valeur varie dans le temps de plus ou moins 45°, préférentiellement de plus ou moins 35°, de manière préférée de plus ou moins 25°, très préférentiellement de plus ou moins 15°, de manière très préférée de plus ou moins 10°, encore plus préférentiellement de plus ou moins 5° et de manière très préférée d'une valeur inférieure ou égale à l'erreur de mesure d'angle. Cette droite contenue dans le plan transverse est choisie de manière arbitraire et est utilisée comme référence pour la mesure de l'angle formé entre cette droite et la projection de la direction d'application de la force d'application sur un plan transverse à la direction longitudinale de la bande transporteuse.

La force d'application est appliquée sur le, ou chaque, rabat par des moyens d'application tels que, par exemple, une roue cylindrique montée mobile en rotation dont la largeur, en d'autres termes la hauteur du cylindre ou largeur de tranche, est adaptée à la taille du rabat. Des profils de roues non cylindriques adaptés au profilé peuvent également être utilisés.

Les moyens d'application de la force d'application peuvent être constitués d'au moins une roue cylindrique montée mobile en rotation, l'axe de rotation de la roue étant sensiblement perpendiculaire à la direction de défilement de la bande transporteuse, et positionnée à proximité de la bande transporteuse de telle sorte que, lors du défilement, le rabat vienne au contact de la tranche de la roue. Par application d'une force d'application selon une direction prédéterminée, le rabat est déformé plastiquement au cours du défilement de manière à enrober au moins partiellement le dispositif électronique. Le nombre de roues et leur position sont ajustés en fonction du nombre de rabats et de leur position.

De manière préférée, le procédé selon l'invention comprend un moyen de chauffe permettant de porter la bande profilée à une température comprise entre 30 et 90°C, préférentiellement entre 40 et 80°C lors de l'étape c). Cette température permet une déformation plastique optimale du, ou des rabats. La bande profilée peut être chauffée juste avant l'étape c), ou préalablement à l'une quelconque des étapes du procédé selon l'invention. La température de la bande peut être mesurée autour du point d'application de la force d'application, préférentiellement à une distance comprise entre 0 et 100 mm du point d'application de la force d'application.

De manière préférée, le procédé selon l'invention comporte, à l'issue de l'étape c), une étape de découpe de la bande profilée selon un plan transverse ne comprenant pas de dispositif électronique.

Dans un arrangement préféré, la bande profilée est alimentée de manière continue. L'étape de découpe est réalisée afin de séparer la bande en modules comprenant chacun un dispositif électronique. L'écart entre deux plans de coupes consécutifs, en d'autres termes la longueur d'un module, est préférentiellement inférieur ou égal à 100 mm et de manière préférée compris entre 50 et 70 mm. L'espacement entre deux dispositifs consécutifs positionnés lors de l'étape b) est ajusté de manière à ce que d'une part il n'existe aucun chevauchement entre deux dispositifs positionnés consécutivement et d'autre part qu'à l'issue de la découpe le dispositif est enrobé totalement dans le module découpé, c'est-à-dire qu'aucune partie dudit dispositif n'émerge dudit module. Des moyens de contrôle peuvent être utilisés afin de vérifier que l'étape de découpe n'a rendue apparente ou émergeante aucune partie du dispositif électronique.

### Bande profilée monobloc

La bande profilée monobloc est préférentiellement obtenue par extrusion d'un matériau élastomérique. Par monobloc, on entend que la bande profilée est obtenue sans assemblage d'éléments, en particulier sans assemblage après extrusion.

Par bande, on entend de manière bien connue une forme dont l'une des dimensions, la longueur, est supérieure aux autres dimensions, par exemple au moins supérieure d'un facteur 2.

On définit pour cette bande profilée une direction longitudinale comme étant la direction parallèle à la longueur de la bande, préférentiellement parallèle au sens de l'extrusion de la bande profilée monobloc. Par plan transverse, on entend le plan perpendiculaire à la direction longitudinale. On définit pour la bande transporteuse une direction longitudinale, correspondant à la direction de défilement de la bande transporteuse. Conformément à l'invention, direction longitudinale de la bande transporteuse et direction longitudinale de la bande profilée sont confondues lorsque la bande profilée est placée sur la bande transporteuse.

La bande profilée monobloc comprend deux bords s'étendant longitudinalement et sensiblement parallèles entre eux. On définit pour cette bande une largeur, mesurée sur la projection de ladite bande sur un plan horizontal selon la direction transverse. De manière préférée, la bande profilée monobloc présente une largeur au plus égale à 40 mm, de préférence supérieure à 3 mm, et de manière préférée comprise entre 10 et 25 mm.

L'embase de la bande profilée monobloc selon l'invention comprend une zone d'accueil du dispositif électronique. Par zone d'accueil, on entend une zone adaptée pour recevoir le dispositif électronique. La zone d'accueil peut comprendre une rainure s'étendant selon la direction longitudinale de la bande profilée, de dimensions adaptées pour recevoir le dispositif électronique. Une telle rainure permet de positionner avec précision le dispositif électronique sur la zone d'accueil et de le maintenir en place, en coopération avec les moyens magnétiques de la bande transporteuse, jusqu'à ce que le rabat soit déformé de manière à enrober ledit dispositif dans la bande profilée monobloc.

La bande profilée monobloc comprend au moins un rabat faisant saillie avec ladite embase et pouvant être déformé plastiquement par application d'une force d'application selon une direction prédéterminée de manière à enrober le dispositif électronique entre ladite embase et ledit au moins un rabat.

Dans la suite de l'exposé, l'expression « le rabat » désigne le rabat de la bande profilée si celle-ci ne comprend qu'un rabat, ou l'ensemble des rabats de la bande profilée selon l'invention si celle-ci comprend plusieurs rabats. Dans ce dernier cas, l'expression « le rabat » doit donc implicitement se comprendre dans la présente comme « les rabats ».

Ainsi, lorsque le rabat est déformé par application d'une force d'application selon une direction prédéterminée, le dispositif électronique placé sur la zone d'accueil est enrobé totalement, c'est-à-dire totalement recouvert par le rabat. En d'autres termes, le dispositif électronique est noyé dans la masse de gomme formée par l'embase et le rabat déformé plastiquement.

Le rabat s'étend parallèlement à la direction longitudinale de la bande profilée.

Dans un arrangement préféré, la bande profilée monobloc comprend deux rabats s'étendant parallèlement à la direction longitudinale de la bande profilée, chaque rabat pouvant être déformé plastiquement par application d'une force d'application selon une direction prédéterminée, de manière à enrober au moins partiellement un dispositif électronique entre ladite embase et ledit rabat, les deux rabats coopérant pour enrober un dispositif électronique entre ladite embase et lesdits rabats.

De manière préférée, dans cet arrangement, la zone d'accueil est limitée transversalement par la jonction entre les rabats et l'embase de la bande profilée, c'est-à-dire que les rabats sont disposés de part et d'autre de la zone d'accueil selon la direction transversale. Ainsi, la présence des rabats permet de positionner avec encore plus de précision le dispositif électronique selon la direction transversale.

### Matériau élastomérique

La bande profilée monobloc est constituée d'un matériau élastomérique présentant préférentiellement une plasticité Mooney à cru comprise entre 30 et 90 unités Mooney (UM), préférentiellement comprise entre 50 et 70 UM. Ce matériau élastomérique est de préférence un isolant électrique, avec de manière préférée une constante diélectrique mesurée à 915 MHz inférieure à 6,5.

Le matériau élastomérique contient 100 pce (parties pour 100 parties d'élastomère en masse) d'un élastomère tel qu'un EPDM (ethylene propylene diene monomer rubber), un caoutchouc butyle, un néoprène ou un élastomère diénique tel que le SBR (styrene-butadiene rubber), le polybutadiène, le caoutchouc naturel, ou le polyisoprène.

Le matériau élastomérique comprend des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade ASTM inférieur ou égal à 500, à un taux maximum de 20 pce.
- il est possible d'ajouter ou de remplacer ces charges par de la craie ou du kaolin.

Lorsque le matériau élastomérique comprend des charges de type silice, il peut également comprendre des agents de couplages de la silice avec les élastomères. De tels agents de couplages sont bien connus de l'Homme du métier. De tels taux et types de charges permettent de garantir une permittivité relative, ou constante diélectrique, inférieure à 6,5, notamment à une fréquence de 915 MHz.

La rigidité à cuit du matériau élastomérique est de préférence inférieure ou proche de celles des mélanges adjacents lorsque, à l'issue du procédé selon l'invention, l'ensemble constitué par une portion de bande profilée monobloc et d'un dispositif électronique est intégré à un article de caoutchouc.

Le matériau élastomérique isolant électriquement comporte de manière préférée un promoteur d'adhésion pour le lier au dispositif électronique. Ce promoteur peut être un sel de cobalt ou de nickel, par exemple du naphtenate de cobalt à un taux inférieur à 3 pce et avec un taux de soufre adapté, de l'ordre de 5 à 7 pce.

### Dispositif électronique

Le dispositif électronique peut être tout type de dispositif électronique. En particulier, le dispositif électronique est de manière préférée un transpondeur à identification par radiofréquence passif, souvent identifié par l'acronyme anglais RFID (Radio-Frequency IDentification) et désigné par la suite sous le terme « transpondeur radiofréquence ».

On entend ici par le terme « transpondeur radiofréquence » que l'interrogation du transpondeur radiofréquence se fait extérieurement à celui-ci et de façon passive. Les phases d'interrogation ne nécessitent alors aucune énergie propre au transpondeur radiofréquence. La fonctionnalité du transpondeur radiofréquence est principalement un rôle d'identification de l'article en caoutchouc auquel il est intégré, par exemple une enveloppe pneumatique.

Les transpondeurs radiofréquences comprennent usuellement une puce électronique et une antenne rayonnante apte à communiquer avec un lecteur radiofréquence.

En particulier la fréquence de communication du transpondeur radiofréquence est située dans la bande des UHF (acronyme de Ultra Hautes Fréquences) comprise entre 300 MHz et 3 GHz permettant d'avoir un compromis avantageux entre une petite taille de l'antenne rayonnante, facilement intégrable dans un profilé monobloc destiné à une enveloppe pneumatique, et une grande distance de lecture du transpondeur radiofréquence, loin de l'enveloppe pneumatique. De façon avantageuse, le transpondeur radiofréquence communique dans la bande étroite de fréquences comprise entre 860 MHz et 960 Mhz et tout spécifiquement sur des bandes très étroites de 860 MHz à 870 MHz et 915 MHz à 925 MHz. En effet, à ces fréquences, les mélanges élastomères classiques de l'enveloppe pneumatique constituent un bon compromis à la propagation des ondes radioélectriques. De plus, ces fréquences sont les plus élevées possibles pour minimiser la taille de l'antenne rayonnante afin de faciliter l'intégration du transpondeur radiofréquence noyé dans un patch caoutchouteux dans l'enveloppe pneumatique.

Selon un premier mode de réalisation, l'antenne rayonnante comporte deux tronçons d'antennes hélicoïdales et la puce électronique est connectée galvaniquement aux deux tronçons d'antennes hélicoïdales.

Selon un autre mode de réalisation, le transpondeur radiofréquence comprend en plus une antenne primaire connectée électriquement à la puce électronique, dans lequel l'antenne primaire est couplée inductivement à l'antenne rayonnante, et dans lequel l'antenne rayonnante est une antenne dipôle constituée d'un ressort hélicoïdal monobrin.

Ce deuxième mode de réalisation a l'avantage de dissocier mécaniquement l'antenne rayonnante des composants électroniques du transpondeur et ainsi de supprimer le point faible des transpondeurs usuels à savoir la zone de fixation des tronçons d'antenne sur le support de la puce électronique.

## Revendications

1. Procédé d'enrobage de dispositifs électroniques (5) dans lequel, successivement :
a. On place une bande profilée (1) sur une bande transporteuse, la bande profilée comprenant une embase (2) et, sur la face opposée à la face en contact avec la bande transporteuse, au moins un rabat (3) faisant saillie avec ladite embase (2), ledit rabat (3) s'étendant selon une direction parallèle à la direction de défilement de la bande transporteuse, dite direction longitudinale, ladite embase (2) comprenant une zone dite zone d'accueil (4) s'étendant le long dudit rabat (3), la bande transporteuse comprenant au regard de la zone d'accueil (4) et sur la face opposée à la face en contact avec la bande profilée (1) un moyen magnétique ;
b. On positionne, selon la direction longitudinale, à intervalle régulier, un dispositif électronique (5) sur la zone d'accueil (4) de la bande profilée (1), ledit dispositif (5) comprenant au moins un matériau ferromagnétique, le moyen magnétique de la bande transporteuse maintenant en position le dispositif électronique (5) sur la zone d'accueil (4) ;
c. On déforme plastiquement le rabat (3) par application d'une force d'application selon une direction prédéterminée de manière à enrober le dispositif électronique (5).

2. Procédé d'enrobage selon la revendication précédente dans lequel, au cours de l'étape b), on positionne le dispositif électronique (5) à une vitesse sensiblement identique et parallèle à celle de défilement de la bande transporteuse.

3. Procédé d'enrobage selon l'une quelconque des revendications précédentes dans lequel l'intervalle de positionnement entre deux dispositifs électroniques (5) est ajusté de telle manière qu'il n'y ait pas de chevauchement transversal entre deux dispositifs électroniques (5) consécutifs.

4. Procédé d'enrobage selon l'une quelconque des revendications précédentes dans lequel la force d'application est comprise entre 20 et 500 N, préférentiellement entre 50 et 100 N.

5. Procédé d'enrobage selon l'une quelconque des revendications précédentes dans lequel la projection de la direction d'application de la force d'application sur un plan transverse à la direction longitudinale de la bande transporteuse, ce plan transverse comprenant un point d'application de la force d'application, forme avec une droite contenue dans ce plan transverse un angle dont la valeur varie dans le temps de plus ou moins 45°.

6. Procédé d'enrobage selon l'une quelconque des revendications précédentes comprenant à l'issue de l'étape c) une étape de découpe de la bande profilée (1) selon un plan transverse ne comprenant pas de dispositif électronique (5).

7. Procédé d'enrobage selon l'une quelconque des revendications précédentes dans lequel le moyen magnétique est positionné sur la bande transporteuse sur la face opposée à la face en contact avec la bande profilée.

8. Procédé d'enrobage selon l'une quelconque des revendications 1 à 6 dans lequel le moyen magnétique est intégré dans la structure de la bande transporteuse.

9. Procédé d'enrobage selon la revendication précédente comprenant, préalablement à l'étape a), une étape d'extrusion d'un matériau élastomérique de manière à obtenir la bande profilée (1).

10. Procédé d'enrobage selon l'une quelconque des revendications précédentes dans lequel la bande profilée (1) comprend deux rabats (3) s'étendant parallèlement à la direction de défilement de la bande transporteuse, chaque rabat (3) pouvant être déformé plastiquement par application d'une force d'application selon une direction prédéterminée, de manière à enrober au moins partiellement le dispositif électronique (5) entre ladite embase (2) et ledit rabat (3), les deux rabats (3) coopérant pour enrober totalement le dispositif électronique (5) entre ladite embase (2) et lesdits rabats (3).

11. Procédé d'enrobage selon la revendication précédente dans lequel la zone d'accueil (4) de la bande profilée (1) est limitée transversalement par la jonction entre les rabats (3) et l'embase (2).

12. Procédé d'enrobage selon l'une quelconque des revendications précédentes dans lequel la largeur de la bande profilée (1) est au plus égale à 40 mm, de préférence supérieure à 3 mm, et de manière préférée comprise entre 10 et 25 mm.

13. Procédé d'enrobage selon l'une quelconque des revendications précédentes dans lequel le matériau élastomérique de la bande profilée (1) présente une plasticité Mooney à cru comprise entre 30 et 90 Unités Mooney (UM), de préférence comprise entre 50 et 70 UM.

14. Procédé d'enrobage selon l'une quelconque des revendications précédentes dans lequel le matériau élastomérique de la bande profilée (1) est un isolant électrique, de préférence avec une constante diélectrique à 915 MHz inférieure à 6,5.

15. Procédé d'enrobage selon l'une quelconque des revendications précédentes dans lequel le dispositif électronique (5) est un transpondeur radiofréquence.

## Patentansprüche

1. Verfahren zur Verkapselung von elektronischen Vorrichtungen (5), bei dem nacheinander:
a. ein profiliertes Band (1) auf einem Förderband platziert wird, wobei das profilierte Band eine Basis (2) und auf der Seite, die zu der mit dem Förderband in Kontakt stehenden Seite entgegengesetzt ist, mindestens eine Lasche (3), die von der Basis (2) vorsteht, beinhaltet, wobei sich die Lasche (3) gemäß einer zu der Laufrichtung des Förderbands parallelen Richtung, als Längsrichtung bezeichnet, erstreckt, wobei die Basis (2) einen Bereich beinhaltet, der als Aufnahmebereich (4) bezeichnet wird und sich entlang der Lasche (3) erstreckt, wobei das Förderband gegenüber dem Aufnahmebereich (4) und auf der Seite, die zu der mit dem Förderband (1) in Kontakt stehenden Seite entgegengesetzt ist, ein magnetisches Mittel beinhaltet;
b. gemäß der Längsrichtung in regelmäßigen Abständen eine elektronische Vorrichtung (5) auf dem Aufnahmebereich (4) des profilierten Bands (1) positioniert wird, wobei die Vorrichtung (5) mindestens ein ferromagnetisches Material beinhaltet, wobei das magnetische Mittel des Förderbands die elektronische Vorrichtung (5) auf dem Aufnahmebereich (4) in Position hält;
c. die Lasche (3) durch Aufbringung einer Aufbringungskraft gemäß einer vorbestimmten Richtung plastisch verformt wird, um die elektronische Vorrichtung (5) zu verkapseln.

2. Verkapselungsverfahren nach dem vorhergehenden Anspruch, wobei während des Schritts b) die elektronische Vorrichtung (5) mit einer Geschwindigkeit positioniert wird, die mit der Laufgeschwindigkeit des Förderbands im Wesentlichen identisch und zu dieser parallel ist.

3. Verkapselungsverfahren nach einem beliebigen der vorhergehenden Ansprüche, wobei der Positionierungsabstand zwischen zwei elektronischen Vorrichtungen (5) so eingestellt wird, dass es zwischen zwei aufeinanderfolgenden elektronischen Vorrichtungen (5) keine transversale Überlappung gibt.

4. Verkapselungsverfahren nach einem beliebigen der vorhergehenden Ansprüche, wobei die Aufbringungskraft zwischen 20 und 500 N und vorzugsweise zwischen 50 und 100 N liegt.

5. Verkapselungsverfahren nach einem beliebigen der vorhergehenden Ansprüche, wobei die Projektion der Aufbringungsrichtung der Aufbringungskraft auf eine zu der Längsrichtung des Förderbands transversale Ebene, wobei diese Ebene einen Aufbringungspunkt der Aufbringungskraft beinhaltet, mit einer Geraden, die in dieser transversalen Ebene enthalten ist, einen Winkel bildet, dessen Wert mit der Zeit um plus oder minus 45° variiert.

6. Verkapselungsverfahren nach einem beliebigen der vorhergehenden Ansprüche, das nach dem Schritt c) einen Schritt des Zerschneidens des profilierten Bands (1) gemäß einer transversalen Ebene, die keine elektronische Vorrichtung (5) beinhaltet, beinhaltet.

7. Verkapselungsverfahren nach einem beliebigen der vorhergehenden Ansprüche, wobei das magnetische Mittel auf dem Förderband auf der Seite, die zu der mit dem Förderband in Kontakt stehenden Seite entgegengesetzt ist, positioniert ist.

8. Verkapselungsverfahren nach einem beliebigen der Ansprüche 1 bis 6, wobei das magnetische Mittel in die Struktur des Förderbands integriert ist.

9. Verkapselungsverfahren nach dem vorhergehenden Anspruch, das vor dem Schritt a) einen Schritt des Extrudierens eines Elastomermaterials beinhaltet, um das profilierte Band (1) zu erhalten.

10. Verkapselungsverfahren nach einem beliebigen der vorhergehenden Ansprüche, wobei das profilierte Band (1) zwei Laschen (3) beinhaltet, die sich parallel zu der Laufrichtung des Förderbands erstrecken, wobei jede Lasche (3) durch Aufbringung einer Aufbringungskraft gemäß einer vorbestimmten Richtung plastisch verformt werden kann, um die elektronische Vorrichtung (5) zwischen der Basis (2) und der Lasche (3) mindestens teilweise zu verkapseln, wobei die zwei Laschen (3) zusammenwirken, um die elektronische Vorrichtung (5) zwischen der Basis (2) und den Laschen (3) vollständig zu verkapseln.

11. Verkapselungsverfahren nach dem vorhergehenden Anspruch, wobei der Aufnahmebereich (4) des profilierten Bands (1) durch die Verbindung zwischen den Laschen (3) und der Basis (2) transversal begrenzt wird.

12. Verkapselungsverfahren nach einem beliebigen der vorhergehenden Ansprüche, wobei die Breite des profilierten Bands (1) höchstens gleich 40 mm ist, vorzugsweise größer als 3 mm ist und vorzugsweise zwischen 10 und 25 mm liegt.

13. Verkapselungsverfahren nach einem beliebigen der vorhergehenden Ansprüche, wobei das Elastomermaterial des profilierten Bands (1) eine Mooney-Viskosität im Rohzustand zwischen 30 und 90 Mooney-Einheiten (MU), vorzugsweise zwischen 50 und 70 MU, aufweist.

14. Verkapselungsverfahren nach einem beliebigen der vorhergehenden Ansprüche, wobei das Elastomermaterial des profilierten Bands (1) ein elektrischer Isolator ist, vorzugsweise mit einer Dielektrizitätskonstante bei 915 MHz von weniger als 6,5.

15. Verkapselungsverfahren nach einem beliebigen der vorhergehenden Ansprüche, wobei die elektronische Vorrichtung (5) ein Hochfrequenztransponder ist.

## Claims

1. Method for encapsulating electronic devices (5), wherein, successively:
a. a profiled strip (1) is placed on a conveyor belt, the profiled strip comprising a base (2) and, on the opposite face to the face in contact with the conveyor belt, at least one flap (3) protruding with respect to said base (2), said flap (3) extending in a direction parallel to the running direction of the conveyor belt, referred to as the longitudinal direction, said base (2) comprising a zone referred to as the receiving zone (4) extending along said flap (3), the conveyor belt comprising, next to the receiving zone (4) and on the opposite face to the face in contact with the profiled strip (1), a magnetic means;
b. an electronic device (5) is positioned, in the longitudinal direction, at a regular spacing, on the receiving zone (4) of the profiled strip (1), said device (5) comprising at least one ferromagnetic material, the magnetic means of the conveyor belt keeping the electronic device (5) in position on the receiving zone (4);
c. the flap (3) is plastically deformed by application of an application force in a predetermined direction so as to encapsulate the electronic device (5).

2. Encapsulating method according to the preceding claim, wherein, during step b), the electronic device (5) is positioned at a speed substantially identical and parallel to the running speed of the conveyor belt.

3. Encapsulating method according to either one of the preceding claims, wherein the positioning spacing between two electronic devices (5) is adapted such that there is no transverse overlap between two consecutive electronic devices (5).

4. Encapsulating method according to any one of the preceding claims, wherein the application force is between 20 and 500 N, preferably between 50 and 100 N.

5. Encapsulating method according to any one of the preceding claims, wherein the projection of the application direction of the application force onto a plane transverse to the longitudinal direction of the conveyor belt, this transverse plane comprising an application point of the application force, forms, with a straight line contained in this transverse plane, an angle of which the value varies over time by plus or minus 45°.

6. Encapsulating method according to any one of the preceding claims, comprising, at the end of step c), a step of cutting the profiled strip (1) in a transverse plane that does not comprise an electronic device (5).

7. Encapsulating method according to any one of the preceding claims, wherein the magnetic means is positioned on the conveyor belt on the opposite face to the face in contact with the profiled strip.

8. Encapsulating method according to any one of Claims 1 to 6, wherein the magnetic means is integrated into the structure of the conveyor belt.

9. Encapsulating method according to the preceding claim, comprising, before step a), a step of extruding an elastomeric material so as to obtain the profiled strip (1).

10. Encapsulating method according to any one of the preceding claims, wherein the profiled strip (1) comprises two flaps (3) extending parallel to the running direction of the conveyor belt, each flap (3) being able to be plastically deformed by application of an application force in a predetermined direction, so as to at least partially encapsulate the electronic device (5) between said base (2) and said flap (3), the two flaps (3) interacting so as to totally encapsulate the electronic device (5) between said base (2) and said flaps (3).

11. Encapsulating method according to the preceding claim, wherein the receiving zone (4) of the profiled strip (1) is limited transversely by the junction between the flaps (3) and the base (2).

12. Encapsulating method according to any one of the preceding claims, wherein the width of the profiled strip (1) is at most equal to 40 mm, preferably greater than 3 mm, and in a preferred manner between 10 and 25 mm.

13. Encapsulating method according to any one of the preceding claims, wherein the elastomeric material of the profiled strip (1) exhibits a Mooney plasticity in the raw state of between 30 and 90 Mooney Units (MU), preferably between 50 and 70 MU.

14. Encapsulating method according to any one of the preceding claims, wherein the elastomeric material of the profiled strip (1) is an electrical insulator, preferably with a dielectric constant at 915 MHz of less than 6.5.

15. Encapsulating method according to any one of the preceding claims, wherein the electronic device (5) is a radiofrequency transponder.
